# EUROPÄISCHE PATENTSCHRIFT

(11) **EP 2 340 189 B1**
(45) Veröffentlichungstag und Bekanntmachung des Hinweises auf die Patenterteilung: **10.10.2012**
(21) Anmeldenummer: 09768487.2
(22) Anmeldetag: 26.08.2009
(51) Int. Cl.: B60T 7/22

(54) **VERFAHREN ZUR EINSTELLUNG EINES BREMSSYSTEMS EINES FAHRZEUGS IM FALLE EINER KOLLISION**
METHOD FOR ADJUSTING A BRAKE SYSTEM OF A VEHICLE IN THE EVENT OF A COLLISION
PROCÉDÉ D'AJUSTEMENT DU SYSTÈME DE FREINAGE D'UN VÉHICULE AUTOMOBILE EN CAS DE COLLISION

(30) Priorität: 20.10.2008 DE 102008042963
(43) Veröffentlichungstag der Anmeldung: 06.07.2011
(73) Patentinhaber: Robert Bosch GmbH, 70469 Stuttgart (DE)
(72) Erfinder: CETINKAYA, Ferah, 74360 Ilsfeld (DE)
(86) Internationale Anmeldenummer: PCT/EP2009/060986
(87) Internationale Veröffentlichungsnummer: WO 2010/046161

(56) Entgegenhaltungen:
- EP-A- 0 967 121
- EP-A- 1 369 327
- WO-A-2004/080771
- DE-A1-102005 059 903
- US-B1- 6 364 433

## Beschreibung

Die Erfindung bezieht sich auf ein Verfahren zur Einstellung eines Bremssystems eines Fahrzeugs.

### Stand der Technik

Aus der DE 197 53 971 A1 ist ein Verfahren zur Steuerung einer Bremsanlage eines Fahrzeugs bekannt, bei dem im Falle einer Kollision des Fahrzeugs mit einem anderen Fahrzeug an den Radbremsen Bremskraft aufgebaut wird, die größer ist als die vom Fahrer durch die Betätigung des Bremspedals und/oder einer Feststellbremse vorgegebene Bremskraft. Hierdurch wird ein automatischer Bremsvorgang mit sehr hoher Bremskraft eingeleitet, wodurch im Falle einer Kollision gewährleistet ist, dass das Fahrzeug sicher im Stillstand verbleibt oder in kurzer Zeit zum Stillstand kommt. Durch diese Maßnahme können Folgeschäden eines Unfalls sowie die Gefahr weiterer Unfälle reduziert werden. Beispielsweise kann die Position eines an einer Kreuzung stehenden Fahrzeuges, welches im Heckbereich von einem anderen Fahrzeug getroffen wird, beibehalten oder zumindest der Verschiebeweg des Fahrzeugs gering gehalten werden.

US-A-6 364 433 zeigt ein Verfahren zur Einstellung eines Bremssystems im Falle einer Kollision, wobei die Position der Kollision am Fahrzeug festgestellt wird und der selbsttätige Aufbau der Bremshraft als Funktion der Position der Kollision durchgeführt wird.

### Offenbarung der Erfindung

Der Erfindung liegt die Aufgabe zu Grunde, im Falle einer Kollision selbsttätig Bremskraft in einem Fahrzeug in der Weise aufzubauen, dass die Unfallfolgen reduziert werden.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren zur Einstellung eines Bremssystems in einem Fahrzeug wird im Falle einer Kollision eines Fahrzeugs mit einem Drittfahrzeug oder mit einem sonstigen Gegenstand selbsttätig bzw. automatisch Bremskraft aufgebaut, und zwar grundsätzlich unabhängig von der Tatsache, ob der Fahrer die Fahrzeugbremse betätigt oder nicht. Dadurch wird trotz des bei der Kollision übertragenen Impulses bzw. des Rückstoßes auf das Fahrzeug die Verschiebebewegung des Fahrzeugs gegenüber dem Untergrund reduziert, was in einer Vielzahl von Unfallsituationen zu einer Minderung der Unfallschwere führt bzw. Folgeunfälle vermeiden hilft.

Um spezifischer auf die Art der Kollision reagieren zu können, wird gemäß der Erfindung zunächst die Position der Kollision an dem Fahrzeug festgestellt, woraufhin je nach Art der Kollision eine unterschiedlich hohe Bremskraft bzw. ein angepasster Anstieg der Bremskraft selbsttätig durchgeführt wird. Bei der Position der Kollision am Fahrzeug wird insbesondere zwischen einem Frontaufprall, einem Heckaufprall oder einem Seitenaufprall mit Unterscheidung linker Seite/rechter Seite unterschieden und dementsprechend der selbsttätige Aufbau der Bremskraft gesteuert. In Betracht kommt eine Beeinflussung des Gradienten des Bremskraftaufbaus, des zu erreichenden Bremskraftmaximums und ggf. auch eine Totzeit, also eine Verzögerung im Aufbau der Bremskraft. Mit diesen Maßnahmen kann flexibel auf die Art der Kollision reagiert werden und es können je nach Kollisionstyp unterschiedliche Reaktionen durchgeführt werden, um die Unfallfolgenschwere zu vermindern.

Im Falle einer Kollision im Heckbereich ist das Fahrzeug schnellstmöglich abzubremsen, um die aus dem Impuls der Kollision resultierende, unkontrollierte Verschiebebewegung des Fahrzeugs so gering wie möglich zu halten. Bei einer schnellstmöglichen Abbremsung des Fahrzeuges wird insbesondere ein hoher Gradient beim Bremskraftaufbau angestrebt und außerdem eine geringst mögliche Verzögerung zwischen dem Eintritt der Kollision und dem Beginn des Bremskraftaufbaus. Um diese Totzeit bzw. Verzögerung so gering wie möglich zu halten, kann es zweckmäßig sein, die Bremseinheit des Bremssystems, welche unmittelbar für die Fahrzeugverzögerung verantwortlich ist, bei Kollisionen so schnell wie möglich in eine Bereitschaftsstellung zu versetzen. Im Falle einer hydraulischen Ausführung der Bremseinheit, beispielsweise als hydraulische oder elektrohydraulische Bremse, wird die Bremseinheit mit dem Hydraulikmedium vorbefüllt. Dies erfolgt vorzugsweise unmittelbar nach dem Feststellen einer Kollision am Fahrzeug, wobei ggf. mithilfe der fahrzeugeigenen Sensorik auch bereits kurz vor dem Eintritt der Kollision die Bereitschaftsstellung der Bremseinheit eingestellt wird, sofern aus den Sensorinformationen hervorgeht, dass eine Kollision unmittelbar bevorsteht. Dies erfolgt beispielsweise durch Auswerten von Informationen aus optischen Sensoren, aus Radar- oder Lidarsensoren oder aus Ultraschallsensoren, mit deren Hilfe die unmittelbar bevorstehende oder bereits erfolgte Kollision sowie insbesondere auch die Position der Kollision am Fahrzeug detektiert werden kann.

Eine weitere Möglichkeit, die Position der Kollision am Fahrzeug festzustellen, stellt die Auswertung der Airbagauslösung im Fahrzeug dar. Da im Fahrzeug an verschiedenen Positionen Airbags verteilt sind, kann durch die Auslösung des entsprechenden Airbags auch auf die Lage der Kollision am Fahrzeug geschlossen werden. Wird beispielsweise ein im Armaturenbrett oder im Lenkrad integrierter Airbag ausgelöst, so spricht dies für eine Kollision im vorderen oder seitlichen Frontbereich des Fahrzeuges. Dementsprechend können Maßnahmen zum selbsttätigen Aufbau der Bremskraft getroffen werden, wie z.B. das bereits erwähnte schnellstmögliche Abbremsen des Fahrzeuges, also mit möglichst geringer Totzeit und mit hohem Gradienten. Umgekehrt kann bei einer festgestellten Kollision im Frontbereich das Fahrzeug mit zeitlicher Verzögerung abgebremst werden.

Des Weiteren kann es zweckmäßig sein, das Verfahren in der Weise auszugestalten, dass der selbsttätige Aufbau der Bremskraft durch eine genau festgelegte Reaktion des Fahrers überstimmt, also außer Kraft gesetzt werden kann. Dies kann beispielsweise das Betätigen des Beschleunigungspedals durch den Fahrer sein oder ein starkes Betätigen des Bremspedals durch den Fahrer, so dass über die Fahrerreaktion eine Bremskraft erzeugt wird, die zumindest das gleiche Niveau erreicht wie die Bremskraft bei selbsttätigem Aufbau.

Das erfindungsgemäße Verfahren kann an unterschiedlichen Bremsentypen eingesetzt werden. In Betracht kommen hydraulische Bremssysteme, elektrohydraulische Bremsen, elektromotorische Bremsen oder ggf. auch elektropneumatische Bremssysteme. Das Bremssystem, welches zur Durchführung des erfindungsgemäßen Verfahrens eingesetzt wird, ist vorzugsweise mit einem Regel- bzw. Steuergerät ausgestattet, in welchem das Verfahren abläuft. Dies kann beispielsweise ein ESP-Steuergerät (elektronisches Stabilitätsprogramm) sein, mit dessen Hilfe sich Fahrdynamikregelungen durch Eingriffe in die Bremsen und ggf. auch in das Motormanagement realisieren lassen. Das Regel- bzw. Steuergerät empfängt Signale von Sensoren, aus denen sich eine tatsächlich erfolgte oder unmittelbar bevorstehende Kollision ableiten lässt, beispielsweise Airbagsignale oder Sensorsignale einer Umfeldsensorik wie Radar, Lidar, optische Sensoren oder Ultraschallsensoren. In dem Regel- bzw. Steuergerät werden nach Auswertung der Eingangssignale Stellsignale erzeugt, mit denen das Bremssystem zum gewünschten Bremskraftaufbau beaufschlagt wird.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung ein Kraftfahrzeug, welches mit vorderen und hinteren Bremseinrichtungen sowie mit einem Regel- bzw. Steuergerät zur Einstellung der Bremseinrichtungen ausgestattet ist,
- Fig. 2: in Blockdarstellung das Zusammenwirken verschiedener Regel- bzw. Steuergeräte und des Bremssystems im Fahrzeug.

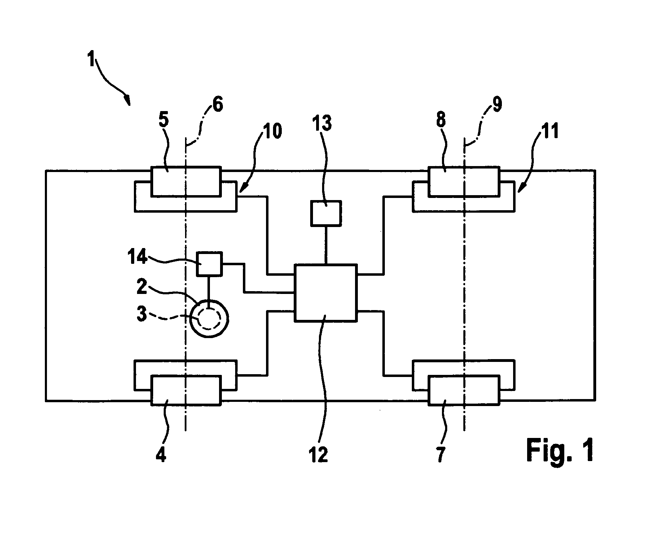

Bei dem in Fig. 1 dargestellten Fahrzeug 1 handelt es sich vorzugsweise um ein Kraftfahrzeug, das über eine als Lenkrad 2 ausgeführte Lenkhandhabe zu steuern ist. Das Kraftfahrzeug 1 weist eine vordere Bremseinrichtung 10 und eine hintere Bremseinrichtung 11 auf, wobei die vordere Bremseinrichtung 10 auf die an der Vorderachse 6 gelagerten Vorderräder 4 und 5 wirkt und die hintere Bremseinrichtung 11 auf die an der Hinterachse 9 gelagerten Hinterräder 7 und 8. Die Bremseinheiten der Bremseinrichtungen 10 und 11 sind als hydraulische Bremsen, elektrohydraulische Bremsen oder elektromotorische Bremsen ausgebildet. Die Bremseinrichtungen 10 und 11 werden über Stellsignale eines Regel- bzw. Steuergerätes 12 eingestellt, bei dem es sich ggf. um ein ESP-Steuergerät handeln kann. Das Regel- bzw. Steuergerät 12 verarbeitet bei der Erzeugung von Stellsignalen zur Beaufschlagung der Bremseinrichtungen 10 und 11 Sensorsignale, die von einer Sensorik 13 stammen, wobei über die Sensorik 13 Fahrzeugzustandsgrößen ermittelbar sind, welche die Längs- und/oder Querdynamik des Fahrzeuges charakterisieren wie z.B. die Fahrzeuglängsgeschwindigkeit, die Längsbeschleunigung, die Querbeschleunigung oder die Gierrate.

Die Sensorik 13 kann aber auch eine Umfeldsensorik enthalten, mit der das Geschehen im Umfeld des Fahrzeuges 1 feststellbar ist, beispielsweise der Abstand und die Relativgeschwindigkeit zu einem vorausfahrenden Fahrzeug. Die Umfeldsensorik umfasst beispielsweise radargestützte Sensoren, optische Sensoren oder Ultraschallsensoren.

In das Lenkrad 2 ist ein Airbag 3 integriert, dessen Funktion über ein Airbag-Steuergerät 14 steuerbar ist. Das Airbag-Steuergerät 14 ist bevorzugt über einen CAN-Datenbus an das Regel- bzw. Steuergerät 12 angeschlossen, um einen Datenaustausch zu ermöglichen.

Im Fahrzeug 1 können weitere Airbags vorhanden sein, die ebenfalls über Stellsignale des Airbag-Steuergerätes 14 auszulösen sind.

Im Falle einer Kollision des Fahrzeuges wird über die Bremseinrichtungen selbsttätig bzw. automatisch Bremskraft aufgebaut, was unabhängig von der Betätigung des Bremspedals durch den Fahrer erfolgt, so dass der Bremskraftaufbau auch für den Fall durchgeführt wird, dass der Fahrer das Bremspedal nicht betätigt. Im Falle einer Betätigung des Bremspedals durch den Fahrer wird vorteilhafterweise überprüft, ob die Pedalbetätigung ausreicht, um die für die jeweilige Situation optimale Bremskraft bereitzustellen. Ist dies nicht der Fall, kann über den selbsttätigen Bremskraftaufbau das gewünschte Bremskraftniveau eingestellt werden.

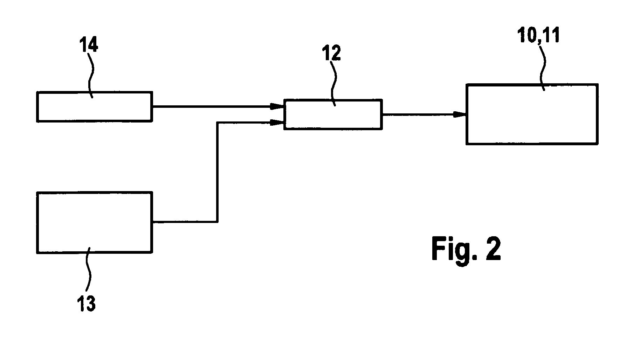

Der selbsttätige Bremskraftaufbau erfolgt in Fällen einer Kollision, wobei ggf. bereits kurz vor dem Eintreffen der Kollision ein hydraulischer Bremsdruck bereitgestellt werden oder auch bereits ein Bremskraftaufbau erfolgen kann. Die Kollision wird beispielsweise über eine Auslösung der Airbags dem Regel- bzw. Steuergerät 12 mitgeteilt, das für die Einstellung der Bremseinrichtungen verantwortlich ist. Die Informationen über die Airbagauslösung bezieht das Regel- bzw. Steuergerät 12, wie Fig. 2 zu entnehmen, aus dem Airbag-Steuergerät 14. Zusätzlich oder alternativ werden auch aus der Sensorik 13 dem Regel- bzw. Steuergerät 12 Informationen bereitgestellt, aus denen eine unmittelbar bevorstehende oder bereits eingetretene Kollision abgeleitet werden kann. Im Regel- bzw. Steuergerät 12 werden unter Berücksichtigung der eingegangenen Signale Stellsignale zur Beaufschlagung der Bremseinrichtungen 10 bzw. 11 generiert.

Um die Unfallfolgenschwere zu mindern, wird nicht nur die Information über die Kollision bereitgestellt, sondern zusätzlich auch noch die Position der Kollision am Fahrzeug ermittelt. Über die Berücksichtigung der Art des Unfalls, beispielsweise ein Heckaufprall, ein Frontaufprall oder ein Seitenaufprall, kann auf den selbsttätigen Bremskraftaufbau Einfluss genommen werden, und zwar sowohl im Hinblick auf den Beginn des Bremskraftaufbaus (Totzeit), den Gradienten des Bremskraftaufbaus als auch das erreichbare Maximalniveau der Bremskraft. Diese Parameter bezüglich des Bremskraftaufbaus werden je nach Art der Kollision mit dem Ziel eingestellt, die Unfallfolgen möglichst gering zu halten.

## Patentansprüche

1. Verfahren zur Einstellung eines Bremssystems eines Fahrzeugs, bei dem im Falle einer Kollision selbsttätig Bremskraft aufgebaut wird, wobei die Position der Kollision am Fahrzeug (1) festgestellt wird und dass der selbsttätige Aufbau der Bremskraft als Funktion der Position der Kollision durchgeführt wird, und
wobei bei einer Kollision im Heckbereich das Fahrzeug sofort abgebremst wird und bei einer Kollision im Frontbereich ein verzögertes Bremsen durchgeführt wird.

2. Verfahren nach Anspruch 1,
**dadurch gekennzeichnet, dass** der Gradient des Bremskraftaufbaus als Funktion der Position der Kollision beeinflusst wird.

3. Verfahren nach Anspruch 1 oder 2,
**dadurch gekennzeichnet, dass** der Bremskraftaufbau verzögert erfolgt.

4. Verfahren nach Anspruch 1 oder 2,
**dadurch gekennzeichnet, dass** der Bremskraftaufbau durch Vorbefüllen einer Bremseinheit (10, 11) mit Hydraulikmedium beschleunigt erfolgt.

5. Verfahren nach einem der Ansprüche 1 bis 4,
**dadurch gekennzeichnet, dass** das Bremskraftmaximum als Funktion der Position der Kollision beeinflusst wird.

6. Verfahren nach einem der Ansprüche 1 bis 5,
**dadurch gekennzeichnet, dass** die Position der Kollision über die Airbagauslösung im Fahrzeug (1) festgestellt wird.

7. Verfahren nach einem der Ansprüche 1 bis 6,
**dadurch gekennzeichnet, dass** die Position der Kollision über eine Umfeldsensorik (13) festgestellt wird, beispielsweise über optische Sensoren, Radar oder Ultraschallsensoren.

8. Verfahren nach einem der Ansprüche 1 bis 7,
**dadurch gekennzeichnet, dass** die selbsttätig aufgebaute Bremskraft durch eine Reaktion des Fahrers außer Kraft gesetzt werden kann, beispielsweise durch Betätigen des Beschleunigungspedals.

9. Regel- bzw. Steuergerät, enthaltend mittel, die zur Durchführung des Verfahrens nach einem der Ansprüche 1 bis 8 ausgestaltet sind.

10. Bremssystem mit einem Regel- bzw. Steuergerät nach Anspruch 9.

11. Bremssystem nach Anspruch 10,
**dadurch gekennzeichnet, dass** der selbsttätige Aufbau von Bremskraft über Stellsignale eines ESP-Steuergeräts (12) erfolgt.

## Claims

1. Method for adjusting a brake system of a vehicle, in which in the event of a collision braking force is built up automatically, wherein the position of the collision on the vehicle (1) is detected, and in that the automatic build up of the braking force is carried out as a function of the position of the collision, and wherein in the event of a collision in the rear region the vehicle is immediately braked, and in the event of a collision in the front region delayed braking is carried out.

2. Method according to Claim 1,
**characterized in that** the gradient of the build up of braking force is influenced as a function of the position of the collision.

3. Method according to Claim 1 or 2,
**characterized in that** the build up of braking force takes place in a delayed fashion.

4. Method according to Claim 1 or 2,
**characterized in that** the build up ofbraking force takes place in an accelerated fashion by pre-charging a braking unit (10, 11) with hydraulic medium.

5. Method according to one of Claims 1 to 4,
**characterized in that** the braking force maximum is influenced as a function of the position of the collision.

6. Method according to one of Claims 1 to 5,
**characterized in that** the position of the collision is detected by means of the triggering of the airbag in the vehicle (1).

7. Method according to one of Claims 1 to 6,
**characterized in that** the position of the collision is detected by means of a surroundings sensor system (13), for example by means of optical sensors, radar or ultrasonic sensors.

8. Method according to one of Claims 1 to 7,
**characterized in that** the braking force which is built up automatically can be deactivated by a reaction of the driver, for example by activation of the accelerator pedal.

9. Closed-loop or open-loop control device, containing means which are configured for carrying out the method according to one of Claims 1 to 8.

10. Brake system having a closed-loop or an open-loop control device according to Claim 9.

11. Brake system according to Claim 10,
**characterized in that** the automatic build up of braking force takes place by means of actuation signals of an ESP control unit (12).

## Revendications

1. Procédé d'ajustement du système de freinage d'un véhicule, dans lequel, en cas de collision, une force de freinage est automatiquement augmentée, la position de la collision sur le véhicule (1) étant établie et l'augmentation automatique de la force de freinage étant réalisée en fonction de la position de la collision, et
dans le cas d'une collision dans la région arrière, le véhicule étant immédiatement freiné et dans le cas d'une collision dans la région avant, un freinage retardé étant effectué.

2. Procédé selon la revendication 1,
**caractérisé en ce que** le gradient de l'augmentation de la force de freinage est influencé en fonction de la position de la collision.

3. Procédé selon la revendication 1 ou 2,
**caractérisé en ce que** l'augmentation de la force de freinage s'effectue de manière retardée.

4. Procédé selon la revendication 1 ou 2,
**caractérisé en ce que** l'augmentation de la force de freinage s'effectue de manière accélérée par préremplissage d'une unité de frein (10, 11) avec un fluide hydraulique.

5. Procédé selon l'une quelconque des revendications 1 à 4,
**caractérisé en ce que** le maximum de force de freinage est influencé en fonction de la position de la collision.

6. Procédé selon l'une quelconque des revendications 1 à 5,
**caractérisé en ce que** la position de la collision est établie par le biais du déclenchement d'airbag dans le véhicule (1).

7. Procédé selon l'une quelconque des revendications 1 à 6,
**caractérisé en ce que** la position de la collision est établie par le biais d'un système de capteurs d'environnement (13), par exemple par le biais de capteurs optiques, d'un radar ou de capteurs à ultrasons.

8. Procédé selon l'une quelconque des revendications 1 à 7,
**caractérisé en ce que** la force de freinage augmentée automatiquement peut être désactivée par une réaction du conducteur, par exemple par l'actionnement de la pédale d'accélérateur.

9. Appareil de réglage ou de commande, contenant des moyens qui sont configurés pour mettre en oeuvre le procédé selon l'une quelconque des revendications 1 à 8.

10. Système de freinage comprenant un appareil de régulation ou de commande selon la revendication 9.

11. Système de freinage selon la revendication 10,
**caractérisé en ce que** l'augmentation automatique de la force de freinage a lieu par le biais de signaux de commande d'un appareil de commande ESP (12).
